# EUROPÄISCHE PATENTSCHRIFT

(11) **EP 1 317 638 B1**
(45) Veröffentlichungstag und Bekanntmachung des Hinweises auf die Patenterteilung: **01.12.2004**
(21) Anmeldenummer: 01973999.4
(22) Anmeldetag: 04.09.2001
(51) Int. Cl.: F16K 31/06, F16K 39/04

(54) **WEGEVENTIL**
DIRECTIONAL-CONTROL VALVE
SOUPAPE DE DISTRIBUTION

(30) Priorität: 11.09.2000 DE 10045008; 17.07.2001 DE 10133990
(43) Veröffentlichungstag der Anmeldung: 11.06.2003
(73) Patentinhaber: Bosch Rexroth AG, 70184 Stuttgart (DE)
(72) Erfinder: GRAF, Peter, 97737 Gemünden (DE); REDER, Herbert, 97851 Rothenfels (DE); IMHOF, Rainer, 97816 Lohr (DE); SCHUBERT, Hans-Georg, 97846 Partenstein (DE); SCHWAB, Frank, 97816 Lohr (DE)
(74) Vertreter: Winter, Brandl, Fürniss, Hübner, Röss, Kaiser, Polte, Partnerschaft
(86) Internationale Anmeldenummer: PCT/DE2001/003378
(87) Internationale Veröffentlichungsnummer: WO 2002/021032

(56) Entgegenhaltungen:
- EP-A- 0 687 843
- DE-A- 3 528 781
- US-A- 5 918 635
- US-A- 6 065 734

## Beschreibung

Die Erfindung betrifft ein Wegeventil mit einem in einem Gehäuse geführten Ventilkörper, über den ein stirnseitiger Anschluß mit einem Radialanschluß verbindbar ist.

Stetig verstellbare Wegeventile werden beispielsweise als proportional verstellbare Drossel eingesetzt. Das Wegeventil ist in zwei Richtungen durchströmbar, d. h. einmal vom stirnseitigen Anschluß zum Radialanschluß und - in Gegenrichtung - vom Radialanschluß zum stirnseitigen Anschluß. Der Ventilkörper kann beispielsweise als tassenförmiger Ventilschieber ausgeführt sein, in dessen Mantel Radialdurchbrüche ausgebildet sind, über die der Radialanschluß auf- bzw. zusteuerbar ist. Die Betätigung des Ventils erfolgt vorzugsweise mittels eines proportional verstellbaren Elektromagneten, über dessen Stößel der Ventilkörper gegen die Kraft einer Druckfeder verschiebbar ist. Um die Stellkräfte zu minimieren, wird der stirnseitig auf den Ventilkörper wirkende Druck über eine Verbindungsbohrung in einen rückwärtigen Druckraum geführt, so daß der Ventilkörper im wesentlichen druckausgeglichen ist.

Durch die US 5 918 635 A ist ein derartiges druckausgeglichenes electromagnetisches Wegeventil bekannt.

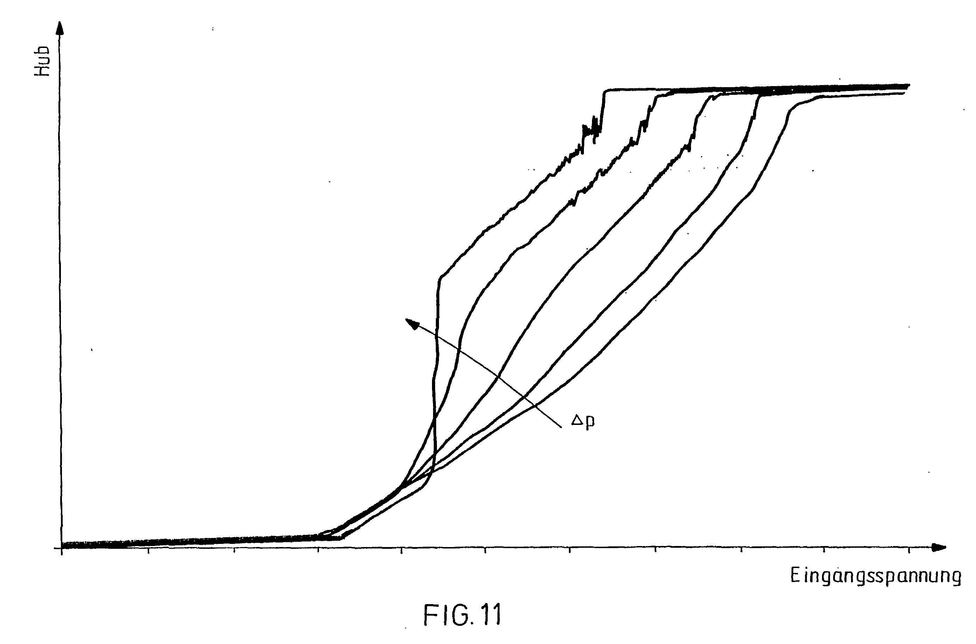

In Figur 11, auf die bereits jetzt Bezug genommen wird, ist die Volumenstromcharakteristik eines derartigen 2/2-Wegeventils dargestellt, wobei der vom Ventilkörper durchgeführte Hub über der relativen Eingangsspannung des Elektromagneten, d. h. über der auf die Maximalspannung bezogenen Eingangsspannung dargestellt ist. Die unterschiedlichen Kennlinien kennzeichnen die Volumencharakteristika für verschiedene Druckdifferenzen Δp, wobei die am flachsten verlaufende Kennlinie eine geringe Druckdifferenz darstellt, während die Kennlinien mit ansteigender Druckdifferenz Δp steiler werden. Gemäß Figur 11 entspricht die rechte, flach verlaufende Kennlinie etwa einem stabilen, idealen Verlauf, wie er sich in der Regel bei einer Durchströmung vom stirnseitigen Anschluß zum Radialanschluß oder - bei einer Durchströmung in umgekehrter Richtung - bei niedrigen Druckdifferenzen einstellt. Bei höheren Druckdifferenzen und Volumenströmen (linke Kennlinie in Figur 11) kann es zu einem schlagartigen Aufreißen des Ventilkörpers kommen. Dieses schlagartige Aufreißen ist durch die Stufe in der linken Kennlinie gemäß Figur 11 gekennzeichnet, gemäß der der Hub bei konstanter Eingangsspannung sprunghaft ansteigt. Des weiteren ist Figur 11 entnehmbar, daß es bei einer Durchströmung vom Radialanschluß zum stirnseitigen Anschluß bei hohen Volumenströmen zu Unstetigkeiten kommen kann, die durch die Schwankungen der Kennlinie gekennzeichnet sind.

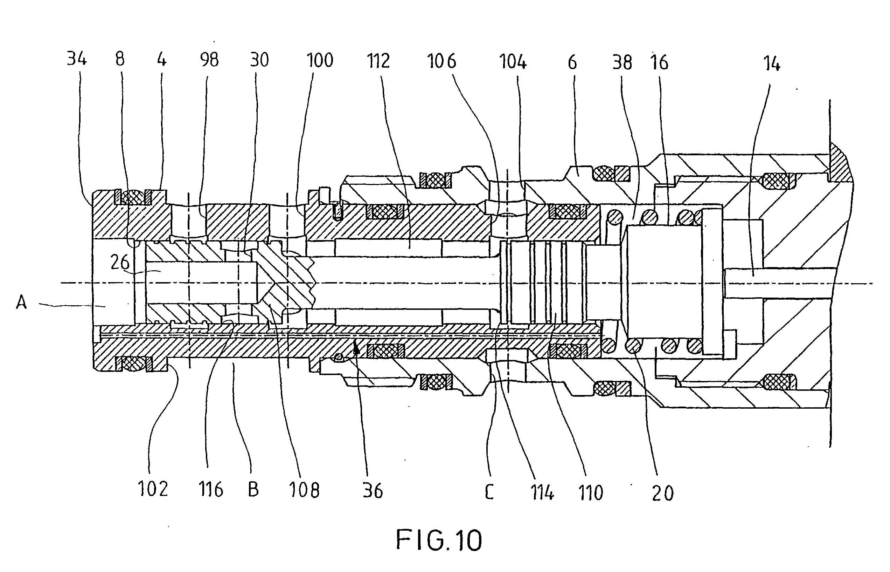

Die vorbeschriebenen Unstetigkeiten, d. h. das sprunghafte Aufreißen des Ventilkörpers und die Schwankungen im Endbereich des Hubes resultieren aus den bei hohen Volumenströmen auf den Ventilkörper wirkenden Strömungskräften, die derart auf den Ventilkolben wirken, dass der Ist-Drosselquerschnitt nicht demjenigen Wert entspricht, der bei idealen Verhältnissen momentan durch die Eingangsspannung vorgegeben ist. Besonders nachteilig ist, daß die Kennlinien bei Ventilen mit der in Figur 10 dargestellten Volumenstromcharakteristik für die beiden Durchströmungsrichtungen, d. h. die Durchströmung vom stirnseitigen Anschluß zum Radialanschluß und in umgekehrter Richtung unterschiedlich sind, so daß die Ansteuerung von Verbrauchern nicht in der vorbestimmten Weise erfolgen kann.

Demgegenüber liegt der Erfindung die Aufgabe zugrunde, ein Wegeventil gemäß US 5 918 635 A zu schaffen, bei dem in beiden Durchströmungsrichtungen bei hohen Druckdifferenzen auftretende Unstetigkeiten minimiert sind.

Diese Aufgabe wird durch ein Wegeventil mit den Merkmalen des Patentanspruchs 1 gelöst.

Erfindungsgemäß wird der rückseitig auf den Ventilkörper wirkende Druck nicht - wie bei der eingangs beschriebenen Lösung - direkt am Ventilkörper abgegriffen, sondern im Bereich des stirnseitigen Anschlusses, d. h. in Durchströmungsrichtung vom Radialanschluß zum stirnseitigen Anschluß gesehen, stromabwärts des Ventilkörpers. Durch diese Maßnahme läßt sich der Einfluß der Strömungskräfte auf den Ventilkörper minimieren, so daß ein sprunghaftes Aufreißen des Ventilkörpers oder das Auftreten von Unstetigkeiten im Endhubbereich beseitigt oder zumindest stark verringert werden kann.

Das Wegeventil kann als Schieberventil oder als Sitzventil und stromlos geöffnet oder geschlossen ausgeführt sein. Es lässt sich desweiteren als Schaltventil oder stetig verstellbares Ventil ausbilden.

Zum stirnseitigen Abgreifen des Druckes bieten sich mehrere alternative Lösungen an. Bei einer erfindungsgemäßen Lösung ist im Ventilkörper eine Axialbohrung ausgebildet, die einerseits in einer Innenstirnfläche des Ventilkörpers, und andererseits in einer rückwärtigen, den Druckraum begrenzenden Stirnfläche des Ventilkörpers mündet. In diese Axialbohrung ist ein Röhrchen eingesetzt, das sich aus dem Ventilkörper heraus in Richtung zum stirnseitigen Anschluß - oder ggf. darüber hinaus - erstreckt.

Bei einer zweiten, alternativen Lösung ist die Verbindungsbohrung als Gehäusekanal ausgebildet, der einerseits im Bereich des stirnseitigen Anschlusses und andererseits im Druckraum mündet. Diese Lösung ist wesentlich robuster als die vorbeschriebene Variante, bei der das zum Anschluß hin vorstehende Röhrchen bei starken Beanspruchungen abbrechen oder abvibrieren kann, so daß ein hoher Aufwand zur Befestigung des Röhrchens erforderlich ist.

Eine Schwierigkeit bei der Ausbildung des Gehäusekanals besteht darin, daß dieser so gelegt werden muß, daß er den Radialanschluß nicht anschneidet, so daß insbesondere bei der Ausbildung des Radialanschlusses durch Radialbohrungssterne eine vergleichsweise komplexe und exakte Kanalführung erforderlich ist. Der Aufwand zur Ausbildung des Gehäusekanals läßt sich verringern, wenn diese Bohrung die Radialbohrung bzw. Radialbohrungen des Radialanschlusses anschneidet und dann durch ein vorzugsweise von der Stirnseite her eingeschobenes Dichtrohr abgedichtet wird.

Der Gehäusekanal wird vorzugsweise als Winkelbohrung ausgeführt, wobei ein axial verlaufender Abschnitt vom stirnseitigen Anschluß her und ein dazu schräg angestellter Schenkel als Schrägbohrung vom Druckraum her gebohrt wird.

Eventuell vorhandene Unstetigkeiten bei großen Druckdifferenzen lassen sich insbesondere bei Wegeventilen, die in eine Öffnungsstellung vorgespannt sind, weiter verringern, wenn parallel zu einem Gehäusekanal ein zweiter, den Ventilkörper durchsetzender Verbindungskanal vorgesehen ist, über die der stirnseitig auf den Ventilkörper wirkende Druck als Steuerdruck abgegriffen wird.

Der den Ventilkörper durchsetzende Verbindungskanal wird vorzugsweise mit einem Axialabschnitt ausgeführt, der in Radialabschnitte übergeht, die in dem rückwärtigen Druckraum münden.

Bei einer Variante dieser Lösung ist in dem den Ventilkörper durchsetzenden Verbindungskanal zwischen der vorderen Stirnfläche des Ventilkörpers und den Radialabschnitten zumindest eine Querbohrung vorgesehen, über die ein weiterer Steuerölquerschnitt aufsteuerbar ist, über den Druckmittel in den rückwärtigen Druckraum gelangen kann. Dieser Steuerölquerschnitt wird nach einer vorgestimmten Axialverschiebung des Ventilkörpers geöffnet.

Bei einem besonders einfach herstellbaren Ausführungsbeispiel mündet der Radialanschluß des Wegeventils direkt, d.h. ohne Umfangsnut in der den Ventilkörper aufnehmenden Ventilbohrung. Es zeigte sich überraschenderweise, daß sich die Unstetigkeiten bei großen Druckdifferenzen durch diese direkte Einmündung des den Radialanschluß ausbildenden Bohrungssterns weiter verringern lassen.

Die Volumenstromcharakteristik des Wegeventils läßt sich weiter verbessern, wenn dem Ventilkörper ein gehäusefester Innenkolben zugeordnet wird, der im Innenraum des Ventilkörpers angeordnet ist. Ein mit dem Druckraum verbundener Dämpfungsraum ist bei dieser Variante durch die Stirnfläche des Innenkolbens einerseits und die Innenstirnfläche des Ventilkörpers andererseits begrenzt. Die auftretenden Strömungskräfte werden über den Innenkolben in das Gehäuse eingeleitet, so daß keine Wechselwirkungen mit dem Ventilkörper erfolgen. Die Volumencharakteristik eines derartigen Wegeventils ist gegenüber den vorbeschriebenen Lösungen nochmals deutlich verbessert. Schwankungen des Druckes lassen sich ausgleichen, indem der Dämpfungsraum über eine Drosselbohrung mit dem Druckraum verbunden ist.

Die Lagerung des Innenkolbens ist besonders einfach, wenn dieser über einen den Mantel des Ventilkörpers durchsetzenden Paßstift im Ventilgehäuse gelagert ist.

Der Ventilkörper des Wegeventils ist vorzugsweise als Ventilschieber ausgeführt, der über einen Proportionalmagneten verstellbar ist.

Sonstige Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 einen Längsschnitt durch ein erstes Ausführungsbeispiel eines erfindungsgemäßen 2/2-Wegeventils;
Figur 2 eine Variante des Wegeventils aus Figur 1;
Figur 3 ein weiteres Ausführungsbeispiel eines Wegeventils, bei dem der Druck zur Kompensation der Strömungskräfte über ein Röhrchen abgegriffen wird;
Figuren 4, 5 Schnitte durch ein weiteres Ausführungsbeispiel eines Wegeventils mit Innenkolben;
Figur 6 Kennlinien eines erfindungsgemäßen 2/2-Wegeventils gemäß den Figuren 4, 5;
Figur 7 eine Schnittdarstellung eines Ausführungsbeispiels eines Wegeventils, das in seiner Grundposition geöffnet ist (stromlos offen);
Figur 8 eine Variante des in Figur 7 dargestellten Ausführungsbeispiels mit verbessertem Durchflußverhalten;
Figur 9 eine weitere verbesserte Variante des Ausführungsbeispiels aus Figur 7;
Figur 10 ein Ausführungsbeispiel als 3/2-Wegeventil und
Figur 11 die Sollwerthubkennlinen eines herkömmlichen 2/2-Wegeventils.

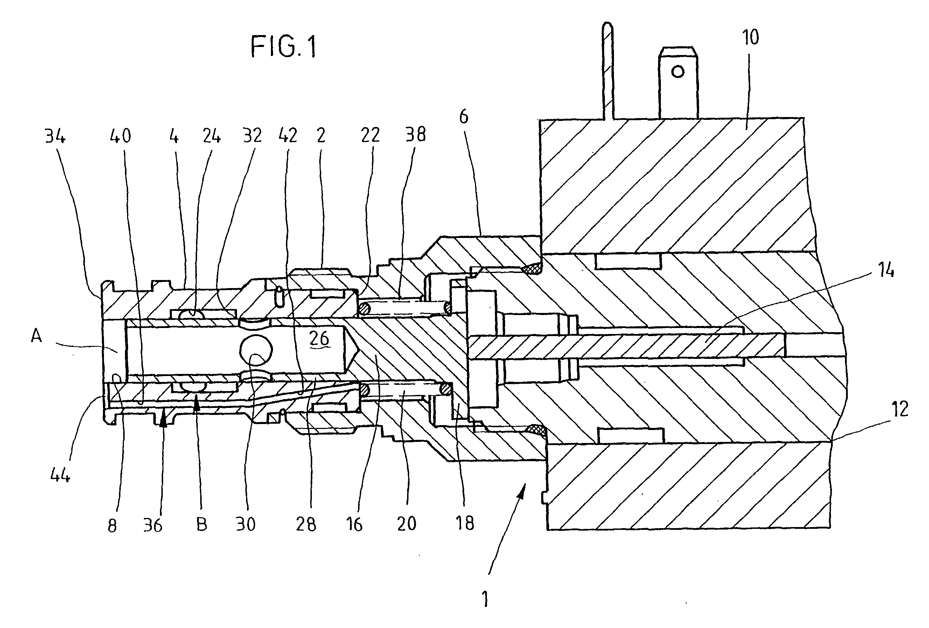

In Figur 1 ist ein erstes Ausführungsbeispiel eines erfindungsgemäßen Wegeventils 1 dargestellt, das als elektrisch betätigtes 2/2-Wege-Einbauventil in Hohlschieberbauweise ausgeführt ist.

Das Wegeventil 1 hat ein zweiteiliges Ventilgehäuse 2, mit einer Hülse 4 und einem Flanschteil 6, an dessen Außenumfang ein Gewinde zum Einschrauben des Einbauventils in einen Ventilblock oder eine Platte ausgebildet ist. Hülse 4 und Flanschteil 6 sind von einer Axialbohrung 8 durchsetzt, die im Bereich des Flanschteils 6 stufenförmig erweitert ist. Im flanschteilseitigen Mündungsbereich der Axialbohrung 8 ist ein Innengewinde vorgesehen, in das ein als Proportionalmagnet ausgeführter Elektromagnet 10 eingeschraubt ist. Bei dem dargestellten Ausführungsbeispiel hat der Elektromagnet 10 einen Einschraubbund 12, der in die Axialbohrung 8 des Flanschteils 6 eintaucht. Ein mit einem Anker des Elektromagneten 10 verbundener Stößel 14 liegt mit seinem freien Endabschnitt an einem Ventilschieber 16 an, der axial verschiebbar in der Hülse 4 geführt ist. Bei dem in Figur 1 dargestellten Ausführungsbeispiel hat der Ventilschieber 16 einen rückwärtigen Ringbund 18, an dem eine Druckfeder 20 angreift, die an der benachbarten Stirnfläche 22 der Hülse 4 abgestützt ist, so dass der Ventilschieber 16 gegen die benachbarte Stirnfläche des Einschraubbundes 12 und gegen den Stößel 14 vorgespannt ist.

Das Wegeventil 1 hat einen durch die stirnseitige Mündung der Axialbohrung 8 ausgebildeten Anschluß A und einen durch einen Radialbohrungsstern 24 ausgebildeten Radialanschluß B, der bei der in Figur 1 dargestellten Version in der Grundstellung des Wegeventils 1 zugesteuert ist.

Der als Hohlschieber ausgeführte Ventilschieber 16 hat einen einen Innenraum 26 umgreifenden Mantel 28, der mehrere am Umfang verteilte Manteldurchbrüche 30 aufweist, die in der dargestellten Grundposition durch eine über eine Umfangskante eines Ringraums des Radialanschlusses B gebildete Steuerkante 32 zugesteuert ist, so dass die Verbindung zwischen den Anschlüssen A und B abgesperrt ist.

In der Ventilhülse 4 ist eine Gehäusebohrung 36 ausgebildet, die einerseits in der in Figur 1 linken Stirnseite des Anschlusses A und andererseits in der rechten, flanschteilseitigen Stirnfläche 22 der Hülse 4 mündet, so dass der stirnflächige Bereich der Hülse 4 mit dem durch den radial erweiterten Teil der Axialbohrung 8 des Flanschteils 6 und die Stirnfläche 22 begrenzten, die Druckfeder 20 aufnehmenden Federraum 38 verbunden ist. Bei dem in Figur 1 dargestellten Ausführungsbeispiel ist die Gehäusebohrung 36 durch eine Winkelbohrung mit einem im Axialabstand zur Ventilachse ausgeführten Schenkel 40 und einem als Schrägbohrung ausgeführten, im rückwärtigen Federraum 38 mündenden Schenkel ausgeführt. Eine derartige Gehäusebohrung 36 läßt sich auf äußerst einfache Weise von den Stirnseiten her durch Bohren fertigen.

Zum Abgreifen des Druckes am Arbeitsanschluß A ist in der Stirnseite 34 eine Radialnut 44 vorgesehen, die sich von der Axialbohrung 8 hin zu dem axial verlaufenden Schenkel 40 der Gehäusebohrung 36 erstreckt. Durch die Gehäusebohrung 36 wird der im Mündungsbereich der Axialbohrung 8 herrschende Druck in den rückwärtigen Federraum 38 gemeldet, in dem der in Figur 1 rechte Endabschnitt des Ventilschiebers 16 angeordnet ist, so dass dessen in Öffnungs- und Schließrichtung wirksame Stirnflächen etwa mit dem gleichen Druck beaufschlagt sind - die Betätigungskräfte für den Elektromagneten 10 sind somit auf ein Minimum reduziert. Bei Betätigung des Elektromagneten 10 stellt sich eine Axialposition des Ventilschiebers 16 ein, die im wesentlichen von der Druckkraft der Druckfeder 20, der Stellkraft des Elektromagneten, dem Druck an den Anschlüssen A, B und den auf den Ventilschieber 16 wirkenden Strömungskräften abhängt. Diese Strömungskräfte können insbesondere bei der Durchströmung des 2/2-Wegeventils 1 vom Radialanschluß B in Richtung zum axialen Anschluß A - wie eingangs erwähnt - eine erhebliche, nicht vernachlässigbare Größenordnung erreichen.

Zur Betätigung des Wegeventils 1 wird der Elektromagnet 10 angesteuert, so dass der Ventilschieber 16 über den Stößel 14 gegen die Kraft der Druckfeder 20 gemäß der Darstellung in Figur 1 nach links bewegt wird. Während dieser Axialverschiebung des Ventilschiebers 16 werden die Manteldurchbrüche 30 über die Steuerkante 32 aufgesteuert, so dass der stirnseitige Anschluß A mit dem Radialanschluß B hydraulisch verbunden ist. Der im Federraum 38 anliegende Druck wird in einem vergleichsweise großen Axialabstand zu den Mantelbohrungen 30 abgegriffen, so dass der Einfluß der Strömungskräfte gegenüber den herkömmlichen Lösungen, bei denen der Druck einfach durch eine im Innenraum 26 mündende Innenbohrung des Ventilschiebers 16 in den Federraum 38 gemeldet wurde, wesentlich verringert wird. Ein plötzliches Aufreißen des Ventils bei hohen Durchflüssen und Druckdifferenzen über dem Wegeventil 1 kann somit zuverlässig verhindert werden. Auf diese Weise kann der wirksame, die Druckdifferenz bestimmende Drosselquerschnitt des 2/2-Wegeventils 1 sehr exakt über den Elektromagneten 10 vorgegeben werden, wobei die Volumenstromcharakteristika bei einer Durchströmung vom Arbeitsanschluß A zum Arbeitsanschluß B und in umgekehrter Richtung nahezu identisch sind - auf diese Kennlinien wird im Folgenden noch näher eingegangen.

Problematisch bei der vorbeschriebenen Lösung ist, dass die Gehäusebohrung 36 den Radialbohrungsstern 24 kreuzt, so dass insbesondere bei kleinen Nenngrößen eine sehr exakte Bohrungsführung erforderlich ist, um ein Schneiden und somit Kurzschließen dieser Kanäle zu verhindern.

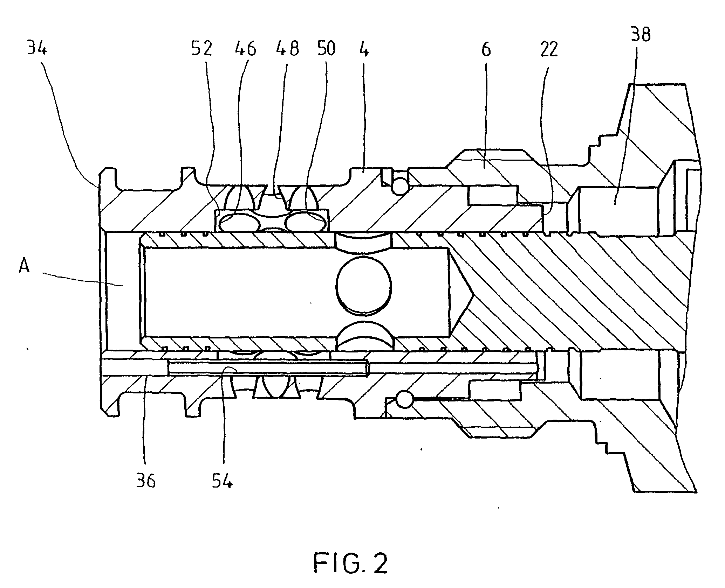

Dieses Problem läßt sich mit dem in Figur 2 dargestellten Ausführungsbeispiel verringern. Dieses Ausführungsbeispiel hat den gleichen Grundaufbau wie das in Figur 1 dargestellte Wegeventil 1, so dass der Einfachheit halber einander entsprechende Bauelemente mit den gleichen Bezugszeichen versehen sind und auf eine nochmalige Beschreibung dieser identischen Bauelemente verzichtet wird. Bei dem in Figur 2 dargestellten Ausführungsbeispiel ist der Radialbohrungsstern des Radialanschlusses B durch drei axial versetzte Bohrungssterne 46, 48, 50 ausgebildet, die in einem gemeinsamen Ringraum 52 münden. Die Gehäusebohrung 36 ist im Axialabstand zur Ventilachse ausgeführt und erstreckt sich als gerade Bohrung von der Stirnseite 34 bis zu der den Federraum 38 begrenzenden Stirnfläche 22 der Hülse 4.

Durch die Vielzahl von Radialbohrungen des Anschlusses B ist es praktisch unvermeidlich, dass die Gehäusebohrung 36 die Bohrungssterne 46, 48, 50 schneidet. Um einen Kurzschluß zwischen den Anschlüssen A und B zu verhindern, ist im Kreuzungsbereich zwischen den Bohrungssternen 46, 48, 50 und der Gehäusebohrung 36 von der Stirnseite 34 her ein Dichtrohr 54 eingesetzt, so dass die Gehäusebohrung 36 gegenüber den Bohrungssternen 46, 48, 50 abgedichtet ist. Bei dem dargestellten Ausführungsbeispiel ist die Gehäusebohrung 36 als Stufenbohrung ausgebildet, wobei das Dichtrohr 54 in einen radial erweiterten Abschnitt eingeschoben ist und somit an einer Radialschulter anliegt. Das Dichtrohr 54 kann mit Preßpassung in der Gehäusebohrung 36 aufgenommen sein, so dass der fertigungstechnische Aufwand minimal ist.

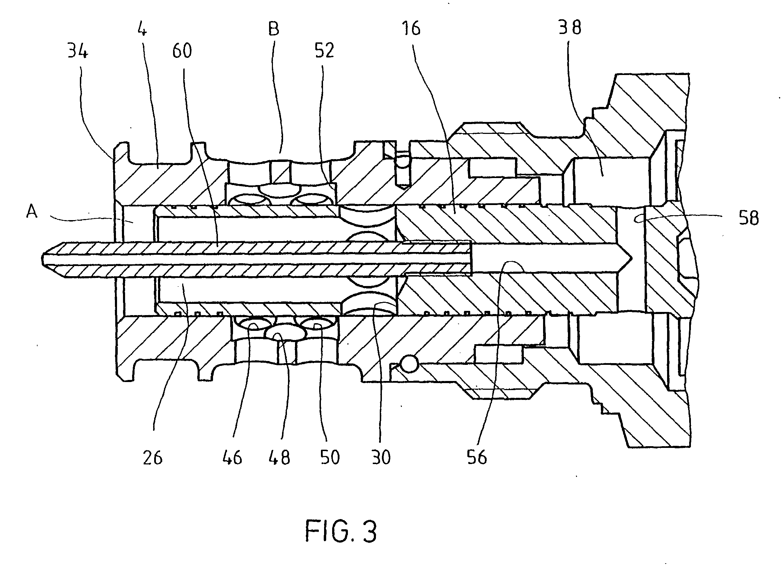

In Figur 3 ist ein Ausführungsbeispiel dargestellt, bei dem der fertigungstechnische Aufwand gegenüber den vorbeschriebenen Lösungen nochmals verringert ist. Der Grundaufbau des in Figur 3 dargestellten Ventils entspricht demjenigen aus Figur 2. Das heißt, in der Hülse 4 sind zueinander versetzte Bohrungssterne 46, 48, 50 ausgebildet, die in dem Ringraum 52 münden. Im Unterschied zu den vorbeschriebenen Lösungen wird der im Bereich des Anschlusses A wirksame Druck nicht über eine Gehäusebohrung, sondern über eine Innenbohrung 56 des Ventilschiebers 16 in den rückwärtigen Federraum 38 gemeldet. Diese Innenbohrung 56 mündet einerseits im Innenraum 26 und andererseits über Radialbohrung 58 im Federraum 38. Um den Einfluß der insbesondere im Umlenkungsbereich des Druckmittels großen Strömungskräfte zu minimieren, ist in die Radialbohrung ein Röhrchen 60 eingesetzt, das den Innenraum 26 durchsetzt und sich in Richtung zur Stirnseite 34 der Hülse 4 - oder wie in Figur 3 gezeigt - darüber hinaus erstreckt, so dass der im Federraum 38 wirksame Druck in großem Axialabstand zu den Manteldurchbrüchen 30 abgegriffen wird.

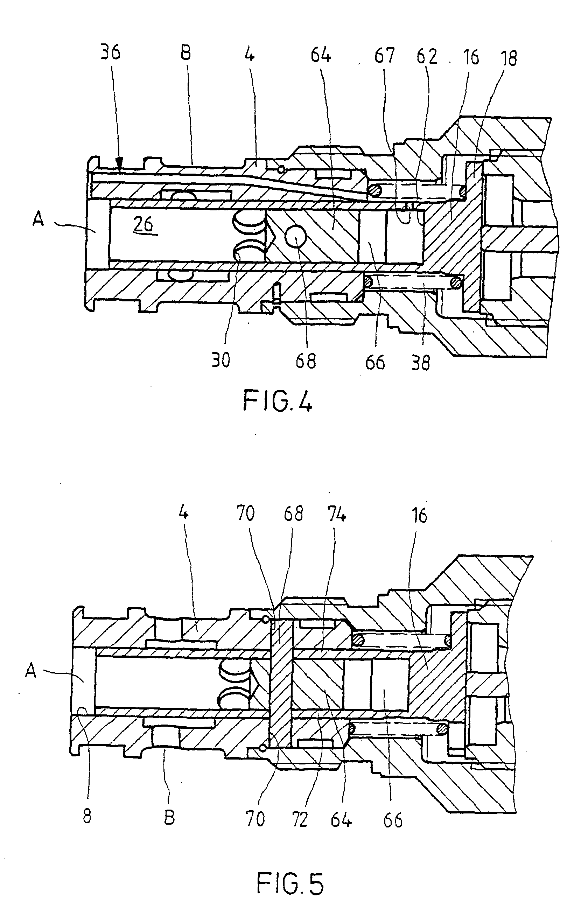

In den Figuren 4 und 5 ist eine weiteres Ausführungsbeispiel eines erfindungsgemäßen 2/2-Wegeventils dargestellt, bei dem der Einfluß der Strömungskräfte gegenüber den vorbeschriebenen Lösungen nochmals verringert werden ist. Figuren 4 und 5 zeigen Schnittdarstellungen des Wegeventils 1, dessen Grundaufbau wieder demjenigen aus Figur 1 entspricht. In der Hülse 4 ist eine als Winkelbohrung ausgeführte Gehäusebohrung 36 vorgesehen, über die der Druck am axialen Anschluß A in den rückwärtigen Federraum 38 gemeldet wird. Im Unterschied zu den vorbeschriebenen Ausführungsbeispielen ist der Innenraum 26 des Ventilschiebers 16 in Richtung zum Ringbund 18 axial verlängert, so dass der Bereich zwischen den Manteldurchbrüchen 30 und einer Innenstirnfläche 62 des Innenraums 26 eine größere Axiallänge als bei den vorbeschriebenen Ausführungsbeispielen hat. In diesem Bereich ist ein gehäusefester Innenkolben 64 vorgesehen, auf dessen Außenumfang der Ventilschieber 16 dichtend geführt ist. Ein von der Stirnfläche des Innenkolbens 64 und der Innenstirnfläche 62 begrenzter Dämpfungsraum 66 ist bei dem dargestellten Ausführungsbeispiel über eine Drosselbohrung 67 im Mantel des Ventilschiebers 16 mit dem Federraum 38 verbunden, so dass in diesem und im Dämpfungsraum 66 im wesentlichen der gleiche Druck, d.h. der Druck am Arbeitsanschluß A vorliegt.

Wie insbesondere aus Figur 5 hervorgeht, ist der Innenkolben 64 über einen Stift 68 in der Hülse 4 verankert. Dieser Stift 68 durchsetzt den Innenkolben 64 und den Mantel des Ventilschiebers 16 in Radialrichtung, wobei die beiden Endabschnitte in radial verlaufenden Lagerbohrungen 70 der Hülse 4 aufgenommen sind. Um die Axialverschiebung des Ventilschiebers 16 gegenüber dem gehäusefesten Innenkolben 64 zu ermöglichen, sind im Mantel des Ventilschiebers 16 zwei Langlöcher 72, 74 ausgebildet, die vom Stift 68 durchsetzt sind. Durch diese Konstruktion ist der Innenkolben 64 an der Hülse 4 und somit am Ventilgehäuse abgestützt, während der Ventilschieber 16 weiter axial verschiebbar in der Axialbohrung 8 und dichtend am Außenumfang des Innenkolbens 64 geführt ist. Der Druck am stirnseitigen Anschluß A wird über die Gehäusebohrung 36, den Federraum 38 und die Drosselbohrung 67 in den Drosselraum 66 geführt, so dass auch die Innenstirnfläche 62 mit dem am stirnseitigen Anschluß A herrschenden Druck beaufschlagt ist.

Die insbesondere im Bereich der Manteldurchbrüche 30 durch die Umlenkung und die Druckdifferenz über dem Drosselquerschnitt verursachten Strömungs- und Strahlkräfte werden über den Innenkolben 64 und den Stift 68 in die Hülse 4 eingeleitet, so dass die Wechselwirkungen mit dem Ventilschieber 16 minimal sind. Durch die Drosselbohrung 67 läßt sich der Einfluß hochfrequenter Druckschwankungen im Drosselraum 66 dämpfen, so dass ein optimales Ansprechverhalten des Wegeventils 1 gewährleistet ist.

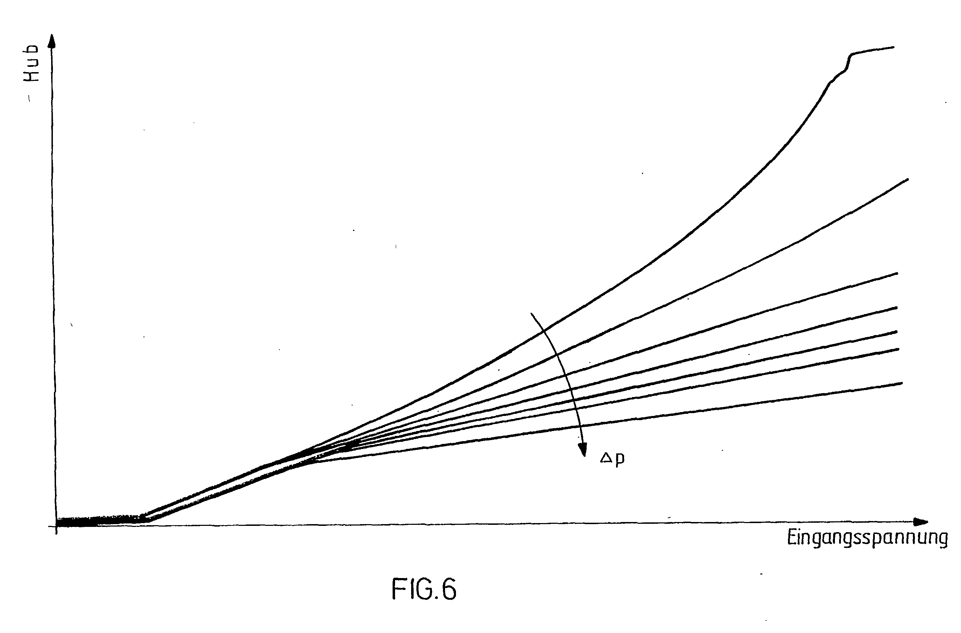

In Figur 6 sind die Kennlinien eines derartigen, optimierten 2/2-Wegeventils dargestellt. Den Sollwerthubkennlinien ist entnehmbar, dass die bei den herkömmlichen Lösungen (Figur **11**) erkennbaren Unstetigkeiten praktisch nicht mehr auftreten. Die Kennlinien haben einen nahezu idealen, linearen Verlauf, wobei keinerlei Aufreißtendenz zu beobachten ist. In der Darstellung gemäß Figur 6 steigen die Druckdifferenzen Δp über dem Wegeventil in Pfeilrichtung an. Bei höheren Druckdifferenzen Δp ergibt sich - wie aus der Abflachung der Kennlinien entnehmbar - eher eine Tendenz zu einem Zuziehen des Ventils, so dass die Strömungskräfte den Ventilschieber in Schließrichtung beaufschlagen. Ein derartiges Verhalten ist wesentlich besser beherrschbar als die Aufreißtendenz bei herkömmlichen Lösungen. Die in Figur 6 dargestellten Kennlinien sind bei den erfindungsgemäßen Lösungen praktisch für eine Durchströmung von vom Anschluß A zum Anschluß B und in umgekehrter Richtung identisch, so dass der Verbraucher in optimaler Weise ansteuerbar ist.

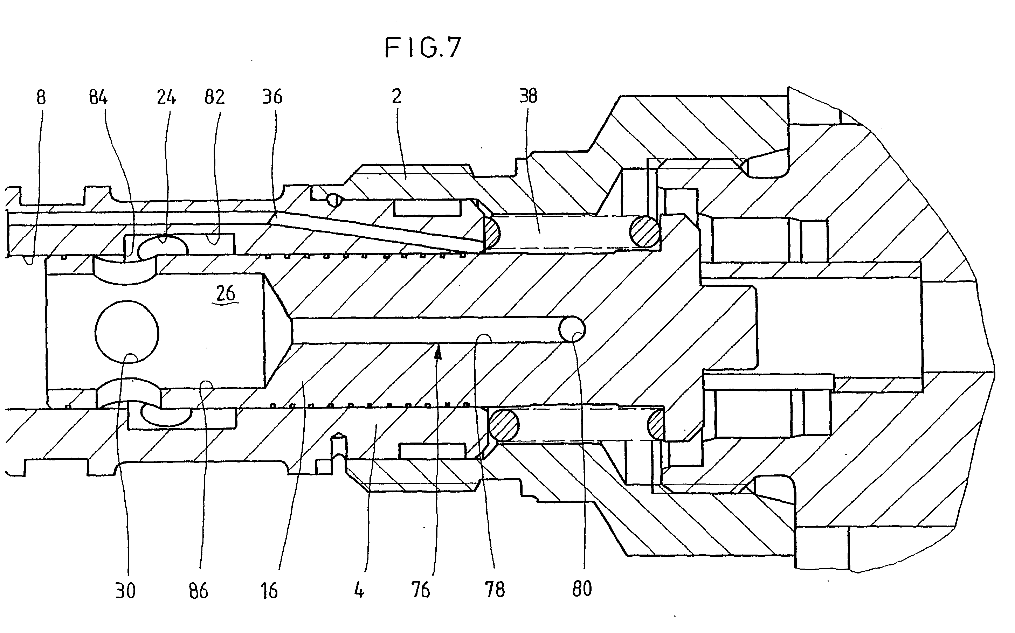

Die vorbeschriebenen Ausführungsbeispiele sind in einer Bauweise ausgeführt, bei der das Wegeventil bei unbestromtem Elektromagneten geschlossen ist (stromlos geschlossen). Das erfindungsgemäße Konzept mit dem Abgreifen des Steueröls (Druckmittel) im Abstand zur Stirnfläche des Ventilschiebers 16 läßt sich selbstverständlich auch bei Wegeventilen 1 realisieren, die bei unbestromtem Elektromagneten geöffnet sind (stromlos offen). Derartige Ausführungsbeispiele werden anhand der Figuren 7 bis 9 erläutert.

Der Grundaufbau der in den Figuren 7 bis 9 dargestellten Ausführungsbeispiele entspricht dem in Figur 1 dargestellten Ventil, so daß hier lediglich auf die Unterschiede eingegangen wird.

Im Prinzip läßt sich die Konstruktion eines stromlos geschlossenen Ventils auf ein stromlos geöffnetes Ventil übertragen, in dem die Manteldurchbrüche 30 im Ventilschieber 16 axial so weit verschoben werden, daß sie in der Grundposition hydraulisch mit dem Radialbohrungsstern 24 verbunden sind und bei Axialverschiebung diese Verbindung zugesteuert werden. D.h., ähnlich wie bei dem in Figur 7 angedeuteten Ausführungsbeispiel, sind die Manteldurchbrüche 30 gegenüber der Darstellung gemäß Figur 1 nach links verschoben.

Vorversuche zeigten, daß eine derartige Lösung bei großen Druckdifferenzen noch gewisse Unstetigkeiten im Durchflußverhalten zeigt. Zur Beseitigung dieser Unstetigkeiten wird bei dem in Figur 7 dargestellten Ausführungsbeispiel parallel zur Verbindungsbohrung 36 im Ventilgehäuse 2 im Ventilschieber 16 ein Verbindungskanal 76 ausgebildet, der einerseits im Innenraum 26 des Ventilschiebers 16 und andererseits im Federraum 38 mündet. Der Durchmesser dieses Verbindungskanals 76 ist größer als derjenige der Gehäusebohrung 36 gewählt.

Bei dem in Figur 7 dargestellten Ausführungsbeispiel hat der Verbindungskanal 76 einen Axialabschnitt 78, der in zumindest einem im Federraum 38 mündenden Radialabschnitt (senkrecht zur Zeichenebene in Figur 7) 80 übergeht. Ein derartiger Verbindungskanal 76 läßt sich somit ohne weiteres durch Axial- und Radialbohrungen ausbilden. Der Durchmesser des Radialabschnittes 80 ist vergleichsweise gering gewählt, so daß dieser als Düse wirkt.

Ähnlich wie bei den vorbeschriebenen Ausführungsbeispielen mündet der Radialbohrungsstern 24 in einer Ringnut 82, die an der Innenumfangswandung der Axialbohrung 8 ausgebildet ist. Die Axialposition der Manteldurchbrüche 30 ist so gewählt, daß diese bei einer Axialverschiebung des Ventilschiebers 16 durch eine Steuerkante 84 der Ringnut 82 zugesteuert werden, so daß die Verbindung vom Anschluß A zum Anschluß B geschlossen wird.

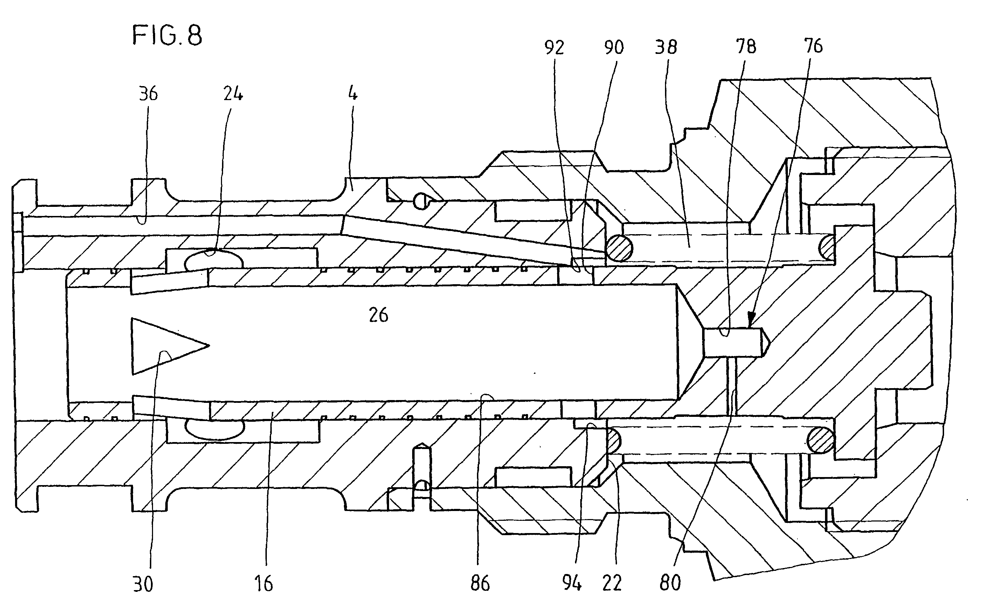

Bei der in Figur 8 dargestellten Variante hat der Ventilschieber 16 ebenfalls einen Verbindungskanal 76, über den der Innenraum 26 des Ventilschiebers 16 mit dem rückwärtigen Druckraum, d.h. dem Federraum 38, verbunden ist.

Im Unterschied zum vorbeschriebenen Ausführungsbeispiel ist die den Innenraum 26 ausbildende Kolbenbohrung 86 in Axialrichtung verlängert, so daß entsprechend der Axialabschnitt 78 verkürzt ist.

Ähnlich wie bei dem in Figur 1 dargestellten Ausführungsbeispiel mündet die Verbindungsbohrung 36 in einer Stirnfläche 22 der Hülse 4. Diese Mündung liegt in demjenigen Bereich, in dem die Stirnfläche 22 vom Ventilschieber 16 durchsetzt wird. Im Ventilschieber sind Querbohrungen 90 ausgebildet, die einerseits in der Kolbenbohrung 86 und andererseits am Außenumfang des Ventilschiebers 16 münden.

Bei einer Axialverschiebung des Ventilschiebers 16 in Richtung vom Magneten weg werden die Querbohrungen 90 durch eine Steuerkante 92 zugesteuert, die durch eine Umfangsnut 94 der Hülse 4 im Mündungsbereich ausgebildet ist. Bei einer Axialverschiebung um das Maß T ist der Steuerquerschnitt vollständig zugesteuert. D.h.,in der Grundposition (stromlos offen) ist ein zusätzlicher Steuerquerschnitt aufgesteuert, der einen wesentlich größeren Durchmesser als derjenige des Radialabschnittes 80 und der Verbindungsbohrung 36 hat.

Wie desweiteren in Figur 8 angedeutet ist können anstelle der kreisförmigen Manteldurchbrüche 30 dreieckförmige Steuerfenster ausgebildet werden, so daß der aufgesteuerte Steuerquerschnitt mit zunehmender Axialverschiebung rasch zunimmt.

Mit der in Figur 8 dargestellten Variante lassen sich die Unstetigkeiten im Durchflußverhalten gegenüber den vorbeschriebenen Lösungen weiter verringern.

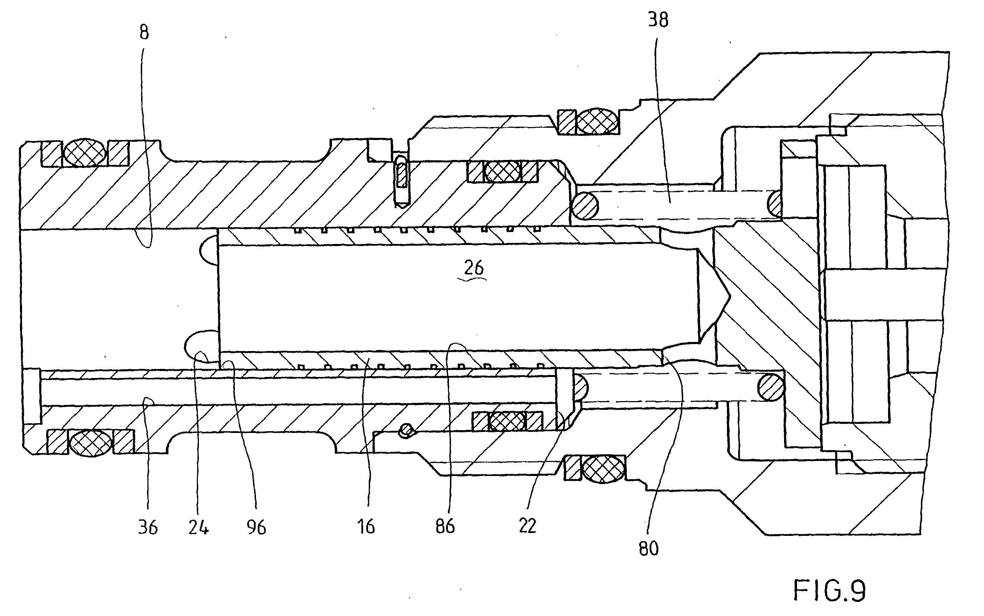

Figur 9 zeigt ein bevorzugtes Ausführungsbeispiel eines Ventils in Stromlos-offen-Bauweise, das sich durch einen äußerst einfachen Aufbau und optimales Durchflußverhalten auszeichnet.

Bei dem dargestellten Ausführungsbeispiel hat der Ventilschieber 16 eine Kolbenbohrung 86, die etwa die gleiche Länge aufweist wie die Kolbenbohrung 86 und der Axialabschnitt 76 zusammen aus den in den Figuren 7 und 8 dargestellten Ausführungsbeispielen.

Im Bereich des Endabschnittes der axial verlaufenden Kolbenbohrung 86 sind eine oder mehrere Radialabschnitte 80 ausgebildet, über die der von der Kolbenbohrung 86 begrenzte Innenraum 26 mit dem Federraum 38 verbunden ist.

Ähnlich wie bei dem in Figur 2 dargestellten Ausführungsbeispiel ist die Gehäusebohrung 36 achsparallel ausgebildet und mündet in der Stirnfläche 22 der Hülse.

Desweiteren mündet bei dieser bevorzugten Ausführungsform der Radialbohrungsstern 24, der aus zueinander versetzten Einzelbohrungen ausgebildet sein kann, direkt in der Axialbohrung 8 und nicht - wie bei den vorbeschriebenen Ausführungsbeispielen - in einer Ringnut 82 der Hülse 4. D.h., der Radialbohrungsstern 24 wird direkt durch die als Steuerkante wirkende Umfangskante 96 des Ventilschiebers 16 auf- bzw. zugesteuert.

Das dargestellte Ausführungsbeispiel ist besonders einfach herstellbar, da die Axialbohrung 8 im wesentlichen durchgehend ohne Ringnut 82 ausgeführt werden kann und die Gehäusebohrung 36 auch ebenfalls in einem einzigen Arbeitsgang herstellbar ist. Auch der Ventilschieber 16 ist äußerst einfach aufgebaut, da in seinem Inneren keine Stufenbohrungen wie bei den in den Figuren 7 und 8 dargestellten Ausführungsbeispielen vorgesehen werden müssen.

Selbstverständlich können bei dem in Figur 9 dargestellten Ausführungsbeispiel anstelle des Radialbohrungssterns 24 mit kreisförmigen Mantelbohrungen auch eine andere Geometrie, bspw. die dreieckförmigen Steuerfenster gemäß Figur 8 gewählt werden.

Bei den vorbeschriebenen Ausführungsbeispielen ist das Wegeventil als 2/2-Wegeventil ausgeführt. Selbstverständlich ist die Erfindung auch bei Konstruktionen mit mehreren Anschlüssen anwendbar. Figur 10 zeigt eine Variante, bei der das Wegeventil mit 3 Anschlüssen ausgebildet ist. Bei der dargestellten Variante sind in der in das Ventilgehäuse 6 eingesetzten Hülse 4 ein Axialanschluss A, ein durch zwei Radialbohrungssterne 98,100 und eine umlaufende Ringnut 102 gebildeter Radialanschluss B sowie einen durch Mantelbohrungen 104 des Gehäuses 6 und dazu fluchtende Durchbrüche 106 der Hülse 4 gebildeten weiteren Radialanschluss C. Der Ventilschieber 16 hat - wie die vorbeschriebenen Ausführungsbeispiele - einen durch eine Sacklochbohrung gebildeten Innenraum 26, in dem Manteldurchbrüche 30 des Ventilschiebers 16 münden. Der dargestellte Ventilschieber hat in dem in der Axialbohrung 8 geührten Abschnitt zwei Ringbünde 108, 110. Die Ringstirnflächen dieser beiden Ringbünde 108, 110 sind derart ausgebildet, dass in der Grundstellung des Ventilschiebers 16, in der dieser durch die Druckfeder 20 gegen eine Anschlag vorgespannt ist, die beiden Anschlüsse B und C über einen Ringraum 112 miteinander verbunden sind. Der die Druckfeder 20 aufnehmende Federraum 38 ist über eine Gehäusebohrung 36 mit demjenigen Bereich verbunden, der an die Stirnseite 34 der Hülse 4 angrenzt. Die Betätigung des in Figur 10 dargestellten Ventils erfolgt über einen proportional verstellbaren Magneten oder über einen Schaltmagneten dessen Stößl 14 an der in Figur 10 rechten Stirnfläche des Ventilschiebers 16 anliegt. In der dargestellten Grundposition sind die Manteldurchbrüche 30 des Ventilschiebers 16 durch den Steg zwischen den beiden Radialbohrungssternen 98, 100 verschlossen, so daß keine Verbindung zwischen dem stirnseitigen Anschluss A und einem der Radialanschlüsse B, C vorliegt.

Bei Ansteuerung des Elektromagneten wird der Ventilschieber 16 gegen die Kraft der Druckfeder 20 nach links verschoben, so daß eine durch die Ringstirnfläche des Ringbundes 110 ausgebildete Steuerkante 114 den Anschluß C zusteuert, während eine durch die Umfangskante des Manteldurchbruchs 30 gebildete Steuerkante 116 den Radialbohrungsstern 98 aufsteuert, so daß die Verbindung vom stirnseitigen Anschluss A zum Radialanschluss B geöffnet wird. Im Federraum 38 der Druckfeder 20 wirkt dabei immer derjenige Druck, der im Abstand Ventilschieber 16 über die Gehäusebohrung 36 abgegriffen wird. Beim dargestellten Ausführungsbeispiel ist die Gehäusebohrung 36 als gerade Durchgangsbohrung ausgebildet, selbstverständlich können - je nach Aufbau des Ventilgehäuses - auch die vorbeschriebenen Varianten zum Abgreifen des Drucks im Federraum verwendet werden.

Die beschriebenen Varianten sind als stromlos-offenoder stromlos-geschlossen-Ventile ausführbar. Selbstverständlich können die vorbeschriebenen Wegeventile 1 auch als Sitz-Ventile ausgeführt sein.

Offenbart ist ein Wegeventil mit einem stirnseitigen Anschluß und zumindest einem Radialanschluß, wobei die Stirnflächen eines Ventilkörpers (Ventilschieber oder Sitzkörper) des Wegeventils etwa vom gleichen Druck beaufschlagt sind, so dass die Stellkräfte zum Verschieben des Ventilkörpers minimal sind. Erfindungsgemäß wird der Druck zum Beaufschlagen einer rückwärtigen Stirnfläche des Ventilkörpers im Axialabstand zum Ventilkörper abgegriffen.

### Bezugszeichenliste

- 1: Wegeventil
- 2: Ventilgehäuse
- 4: Hülse
- 6: Flanschteil
- 8: Axialbohrung
- 10: Elektromagnet
- 12: Einschraubbund
- 14: Stößel
- 16: Ventilschieber
- 18: Ringbund
- 20: Druckfeder
- 22: Stirnfläche
- 24: Radialbohrungsstern
- 26: Innenraum
- 28: Mantel
- 30: Manteldurchbruch
- 32: Steuerkante
- 34: Stirnseite
- 36: Gehäusebohrung
- 38: Federraum
- 40: Schenkel (axial)
- 42: Schenkel (schräg)
- 44: Radialnut
- 46, 48, 50: Bohrungssterne (B)
- 52: Ringraum
- 54: Dichtrohr
- 56: Innenbohrung
- 58: Radialbohrung
- 60: Röhrchen
- 62: Innenstirnfläche
- 64: Innenkolben
- 66: Dämpfungsraum
- 67: Drosselbohrung
- 68: Stift
- 70: Aufnahmebohrung
- 72, 74: Langloch
- 76: Verbindungskanal
- 78: Achsialabschnitt
- 80: Radialabschnitt
- 82: Ringnut
- 84: Steuerkante
- 86: Kolbenbohrung
- 90: Querbohrung
- 92: Steuerkante
- 94: Umfangsnut
- 96: Steuerkante
- 98: Radialbohrungsstern
- 100: Radialbohrungsstern
- 102: Ringbund
- 104: Mantelbohrung
- 106: Durchbruch
- 108: Ringbund
- 110: Ringbund
- 112: Ringraum
- 114: Steuerkante
- 116: Steuerkante

## Patentansprüche

1. Wegeventil, insbesondere stetig verstellbares Wegeventil mit einem in einer Ventilbohrung (8) eines Gehäuses (4, 6) geführten Ventilkörper (16), über den eine Verbindung zwischen einem stirnseitigen Anschluß (A) und zumindest einem Radialanschluß (B) auf- und zusteuerbar sind, wobei der an einem Anschluß (A) wirksame Druck über eine Verbindungsbohrung 1.1 zur Ventilkörperrückseite geführt ist, **dadurch gekennzeichnet, dass** der Druck im Abstand zum Ventilkörper (16) im Bereich des stirnseitigen Anschlusses (A) abgegriffen ist.

2. Wegeventil nach Patentanspruch 1, wobei der Ventilkörper (16) tassenförmig ausgeführt ist und in dessen Mantel (28) Manteldurchbrüche (30) zur Verbindung des stirnseitigen Anschlusses (A) mit dem Radialanschluss (B) ausgebildet sind.

3. Wegeventil nach Patentanspruch 2, wobei der Ventilkörper (16) eine Innenbohrung (56) hat, die einerseits in einem rückseitigen Druckraum (38) mündet, und in die ein Röhrchen (60) eingesetzt ist, das sich von der Innenbohrung (56) weg aus dem Ventilkörper (16) heraus in Richtung zum stirnseitigen Anschluß (A) erstreckt.

4. Wegeventil nach Patentanspruch 1 oder 2, mit einem Gehäusekanal (36), der einerseits im Bereich des stirnseitigen Anschlusses (A) und andererseits im rückwärtigen Druckraum (38) mündet.

5. Wegeventil nach Patentanspruch 4, wobei der Gehäusekanal (36) als Winkelbohrung ausgeführt ist und ein in der Stirnfläche (34) des Axialanschlusses (A) mündender Schenkel (40) als achsparallele Bohrung und ein im Druckraum (38) mündender Schenkel (42) als Schrägbohrung ausgeführt ist.

6. Wegeventil nach Patentanspruch 4 oder 5, wobei der Gehäusekanal (36) zumindest eine Radialbohrung des Radialanschlusses (B) schneidet und im Schnittbereich ein Dichtrohr (54) eingesetzt ist.

7. Wegeventil nach einem der Patentansprüche 4 bis 6, wobei der Ventilkörper (16) einen Verbindungskanal (76) hat, der einerseits in der anschlußseitigen Stirnseite des Ventilkörpers (16) und andererseits im rückwärtigen Druckraum (38) mündet.

8. Wegeventil nach Patentanspruch 7, wobei der Verbindungskanal (76) einen Axialabschnitt (78) hat, der in im rückwärtigen Druckraum (38) mündende Radialabschnitte (80) übergeht.

9. Wegeventil nach Patentanspruch 8, mit Querbohrungen (90), über die nach einer Axialverschiebung des Ventilkörpers (16) ein zusätzlicher Durchflußquerschnitt zum Druckraum (38) auf- bzw. zusteuerbar ist.

10. Wegeventil nach einem der vorhergehenden Patentansprüche, wobei der Radialanschluß (B) über einen Radialbohrungsstern (24) in der Ventilbohrung (8) des Gehäuses (4, 6) mündet.

11. Wegeventil nach einem der vorhergehenden Patentansprüche, wobei dieses stromlos offen oder stromlos geschlossen ausgeführt ist.

12. Wegeventil nach einem der vorhergehenden Patentansprüche, wobei in einem Innenraum (26) des Ventilkörpers (16) ein gehäusefester Innenkolben (64) geführt ist, der im Bereich zwischen den Manteldurchbrüchen (30) und einer Innenstirnfläche (62) des Ventilkörpers angeordnet ist, und der mit dem Ventilkörper (16) einen Dämpfungsraum (66) begrenzt, der mit dem rückwärtigen Druckraum (38) verbunden ist.

13. Wegeventil nach Patentanspruch 12, wobei im Mantel (28) des Ventilkörpers (16) eine Drosselbohrung (67) ausgebildet ist, die einerseits im rückwärtigen Druckraum (68), andererseits im Dämpfungsraum (66) mündet.

14. Wegeventil nach Patentanspruch 12 oder 13, wobei der Innenkolben (64) über einen zumindest ein Langloch (72, 74) des Ventilkörpers (16) durchsetzenden Stift (68) im Gehäuse (4, 6) befestigt ist.

15. Wegeventil nach einem der vorhergehenden Patentansprüche, wobei der Ventilkörper ein vorzugsweise über einen Elektromagneten (10) betätigter Ventilschieber (16) ist.

## Claims

1. A directional control valve, in particular a continuously adjustable directional control valve, comprising a valve body (16) guided in a valve bore (8) of a housing (4, 6), via which a connection between a front-side connector (A) and at least one radial connector (B) can be opened and closed, with the pressure effective at the connector (A) being guided to the valve body rear side via a connecting bore (36, 56, 60), wherein the pressure is tapped at a distance from said valve body (16) in the area of said front-side connector (A).

2. The directional control valve according to claim 1, wherein said valve body (16) is cup-shaped and comprises in its casing (28) case openings (30) adapted to connect said front-side connector (A) with said radial connector (B).

3. The directional control valve according to claim 2, wherein said valve body (16) comprises an inner bore (56) which opens into a rearward pressure chamber (38), and into which a tube (60) is inserted which extends from said inner bore (56) out of said valve body (16) towards said front-side connector (A).

4. The directional control valve according to claim 1 or 2, comprising a housing channel (36) which, on the one side, opens into the area of said front-side connector (A) and, on the other side, into said rearward pressure chamber (38).

5. The directional control valve according to claim 4, wherein said housing channel (36) is designed as an angle bore, and a leg (40) opening into the front face (34) of said axial connector (A) is formed as a bore parallel to the axis, and a leg (42) opening into said pressure chamber (38) is formed as an inclined bore.

6. The directional control valve according to claim 4 or 5, wherein said housing channel (36) cuts at least one radial bore of said radial connector (B), and a sealing tube (54) is inserted in the cutting area.

7. The directional control valve according to one of claims 4 to 6, wherein said valve body (16) comprises a connecting channel (76) which, on the one side, opens into the connector-side front side of said valve body (16) and, on the other side, in said rearward pressure chamber (38).

8. The directional control valve according to claim 7, wherein said connecting channel (76) comprises an axial portion (78) which merges into radial portions (80) opening into said rearward pressure chamber (38).

9. The directional control valve according to claim 8, comprising transverse bores (90) via which an additional through-flow cross section to said pressure chamber (38) can be opened or closed, respectively, after an axial shifting of said valve body (16).

10. The directional control valve according to any of the preceding claims, wherein said radial connector (B) opens into said valve bore (8) of said housing (4, 6) via a radial bore star (24).

11. The directional control valve according to any of the preceding claims, wherein said directional control valve is designed currentless open or currentless closed.

12. The directional control valve according to any of the preceding claims, wherein an inner piston (64) that is stationary in the housing is guided in an inner chamber (26) of said valve body (16), said inner piston (64) being positioned in the area between said case openings (30) and an inner front face (62) of said valve body and limiting with said valve body (16) a damping chamber (66) connected with said rearward pressure chamber (38).

13. The directional control valve according to claim 12, wherein a throttle bore (67) is formed in said casing (28) of said valve body (16), said throttle bore (67) opening, on the one side, into said rearward pressure chamber (38) and, on the other side, into said damping chamber (66).

14. The directional control valve according to claim 12 or 13, wherein said inner piston (64) is fixed in said housing (4, 6) via a pin (68) passing at least through one long hole (72, 74) of said valve body (16).

15. The directional control valve according to any of the preceding claims, wherein said valve body is a valve shift (16) preferably actuated via an electromagnet (10).

## Revendications

1. Soupape de distribution, notamment soupape de distribution réglable continûment, comportant un corps de soupape (16) guidé dans un alésage de soupape (8) d'un boîtier (4, 6) et au moyen duquel l'ouverture et la fermeture d'une liaison entre un raccord frontal (A) et au moins un raccord radial (B) peuvent être commandées, et dans laquelle la pression active au niveau d'un raccord (A) est envoyée par l'intermédiaire d'un perçage côté arrière du corps de soupape, **caractérisé en ce que** la pression est prélevée à distance du corps de soupape (16) dans la zone du raccord frontal (A).

2. Soupape de distribution selon la revendication 1, dans laquelle le corps de soupape (16) est réalisé en forme de pot et que des passages traversants (30) sont formés dans l'enveloppe de ce corps pour relier le raccord frontal (A) au raccord radial (B).

3. Soupape de distribution selon la revendication 2, dans laquelle le corps de soupape (16) possède un perçage intérieur (56) qui d'une part débouche dans une chambre arrière de pression (38), et dans lequel est inséré un petit tube (60) qui s'étend depuis le perçage intérieur (56) à partir du corps de soupape (16) en direction du raccord frontal (A).

4. Soupape de distribution selon la revendication 1 ou 2, comportant un canal (36) formé dans le boîtier et qui débouche d'une part dans la zone du raccord frontal (A) et d'autre part dans la chambre arrière de pression (38).

5. Soupape de distribution selon la revendication 4, dans laquelle le canal (36) du boîtier est réalisé sous la forme d'un perçage coudé et qu'une branche (40), qui débouche dans la face frontale (34) du raccord axial (A), est réalisée sous la forme d'un perçage parallèle à l'axe et qu'une branche (42) débouchant dans la chambre de pression (38) est agencée sous la forme d'un perçage oblique.

6. Soupape de distribution selon la revendication 4 ou 5, dans laquelle le canal (36) du boîtier recoupe au moins un perçage radial du raccord radial (B) et est inséré dans la zone de coupe d'un tube d'étanchéité (54).

7. Soupape de distribution selon l'une des revendications 4 à 6, dans laquelle le corps de soupape (16) comporte un canal de liaison (76), qui débouche d'une part sur la face frontale, du côté du raccord, du corps de soupape (16) et d'autre part dans la chambre arrière de pression (38).

8. Soupape de distribution selon la revendication 7, dans laquelle le canal de liaison (76) possède une section axiale (78), qui se prolonge par des sections radiales (80), qui débouchent dans la chambre arrière de pression (38).

9. Soupape de distribution selon la revendication 8, comportant des passages transversaux (90), au moyen desquels, après un déplacement axial du corps de soupape (16), l'ouverture et la fermeture d'une section transversale supplémentaire de passage en direction de la chambre de pression (38) peuvent être commandées.

10. Soupape de distribution selon l'une des revendications précédentes, dans laquelle le raccord radial (B) débouche au moyen d'une étoile de perçages radiaux (24) dans l'alésage de soupape (8) du boîtier (4, 6).

11. Soupape de distribution selon l'une des revendications précédentes, dans laquelle cette soupape est réalisée de manière à être ouverte en l'absence de courant ou à être fermée en l'absence de courant.

12. Soupape de distribution selon l'une des revendications précédentes, dans laquelle dans une chambre intérieure (26) du corps de soupape (16) est guidé un piston intérieur (64) solidaire du boîtier et qui est disposé dans la zone située entre les passages traversants (30) de l'enveloppe et une surface frontale intérieure (62) du corps de soupape, et qui délimite, avec le corps de soupape (16), une chambre d'amortissement (66), qui est reliée à la chambre arrière de pression (38).

13. Soupape de distribution selon la revendication 12, dans laquelle dans l'enveloppe (28) du corps de soupape (16) est formé un perçage d'étranglement (67), qui débouche d'une part dans la chambre arrière de pression (68) et d'autre part dans la chambre d'amortissement (66).

14. Soupape de distribution selon la revendication 12 ou 13, dans laquelle le piston intérieur (64) est fixé dans le boîtier (4, 6) par l'intermédiaire d'une tige (68) qui traverse au moins un trou allongé (72, 74) du corps de soupape (16).

15. Soupape de distribution selon l'une des revendications précédentes, dans laquelle le corps de soupape est un poussoir de soupape (16) qui est actionné de préférence au moyen d'un électroaimant (10).
